# EUROPÄISCHE PATENTSCHRIFT

(11) **EP 3 740 378 B1**
(45) Veröffentlichungstag und Bekanntmachung des Hinweises auf die Patenterteilung: **01.07.2026**
(21) Anmeldenummer: 18800929.4
(22) Anmeldetag: 12.11.2018
(51) Int. Cl.: B32B 1/08, B32B 5/24, B32B 5/26, B32B 25/04, B32B 25/10, B32B 25/14, B32B 25/16, B32B 25/20, C08L 23/16

(54) **SCHLAUCH, INSBESONDERE FÜR KRAFTFAHRZEUGE**
HOSE, IN PARTICULAR FOR MOTOR VEHICLES
TUYAU FLEXIBLE, EN PARTICULIER POUR DES VÉHICULES AUTOMOBILES

(30) Priorität: 15.01.2018 DE 102018200542
(43) Veröffentlichungstag der Anmeldung: 25.11.2020
(73) Patentinhaber: ContiTech Techno-Chemie GmbH, 61184 Karben (DE)
(72) Erfinder: AUGUSTINE, Mathew, 30419 Hannover (DE); SEIBOLD, Sebastian, 30419 Hannover (DE)
(74) Vertreter: Bird & Bird LLP - Hamburg
(86) Internationale Anmeldenummer: PCT/EP2018/080860
(87) Internationale Veröffentlichungsnummer: WO 2019/137660

(56) Entgegenhaltungen:
- EP-A1- 3 026 078
- DE-A1- 102010 037 211
- DE-A1- 102011 055 316
- DE-A1- 102013 103 759

## Beschreibung

Die Erfindung betrifft einen Schlauch, der insbesondere im Kraftfahrzeug Verwendung findet und der nicht von Raubtieren, wie z. Bsp. Mardern, oder von Nagetieren, wie z. Bsp. Ratten, zerbissen wird.

Insbesondere Marder beißen gerne in Schläuche jeglicher Art, wie sie im Kraftfahrzeug, vor allem im Motorraum zu finden sind. Hierbei kann es sich um Kühl- und Scheibenwischer-wasserschläuche, Bremsschläuche oder um Kraftstoffleitungen handeln. Marderbisse sind für Kraftfahrzeuge gefährlich. So können bspw.

Löcher in Kühlwasserschläuchen eine Überhitzung des Motors und als Folge einen totalen Motorschaden nach sich ziehen. Bei Leckagen an Bremsschläuchen kann dadurch die Bremsfunktion versagen.

Bisher wurden zur Vermeidung von Bissen von Raubtieren und / oder Nagetieren Schutzhüllen verschiedenster Art zusätzlich auf den gefährdeten Schläuchen angebracht. In DE 10343040A1 wird hierzu bspw. ein zusätzlicher Metallwedel auf den Schlauch aufgezogen. Derartige Metallwedel sind allerdings im Bereich des Motorraums, wo es zu Spannungsentladungen kommen kann, nicht verwendbar. Abgesehen von den zusätzlichem Mehrkosten für den Metallwedel und das zusätzliche Aufbringen.

In DE4426493A1 werden zum Schutz vor Bissen die Schläuche mit hochzugfesten Fäden oder Strängen umstrickt. Auch diese Schläuche sind nur bedingt zum Einsatz im Kraftfahrzeugbereich geeignet, da sie meist nicht die geforderten physikalischen Eigenschaften aufweisen. EP 3 026 078 A1 offenbart einen Schlauch, umfassend eine Innenschicht, eine Außenschicht und eine dazwischen angeordnete Festigkeitsträgerlage, wobei die Innenschicht 50-100 phr an Fluorkautschuk oder Fluorkautschukmischungen enthält. DE 10 2013 103759 A und DE 10 2011 055316 A1 offenbaren ebenso einen Schlauch, umfassend eine Innenschicht, eine Außenschicht und eine dazwischen angeordnete Festigkeitsträgerlage, wobei die Innenschicht 50-100 phr an Fluorkautschuk oder Fluorkautschukmischungen enthält.

Bekannt sind ebenso Repellents, die ggf. in die Kautschukmischung einer Schlauchschicht hinzugefügt werden können. Allerdings wirken sich diese Repellents zumeist ebenso negativ auf die für den jeweiligen Anwendungszweck geforderten Eigenschaften aus.

Die Aufgabe der Erfindung besteht somit darin, einen Schlauch, insbesondere zur Verwendung im Kraftfahrzeug, bereitzustellen, der sich durch eine verbesserte Bissfestigkeit gegenüber Bissen von Raubtieren, wie z. Bsp. Mardern, oder von Nagetieren, wie z. Bsp. Ratten, auszeichnet.

Gelöst wird diese Aufgabe dadurch, dass der Schlauch folgenden Schichtenaufbau besitzt:
- eine erste innenliegende Schicht aus einer vernetzten Kautschukmischung, wobei die Kautschukmischung der ersten Schicht 60 bis 100 phr wenigstens eines fluorhaltigen Kautschuks enthält, und
- eine zweite Schicht aus einer vernetzten Kautschukmischung, wobei die Kautschukmischung der zweiten Schicht 60 bis 100 phr wenigstens eines Silikonkautschuks enthält, und
- eine dritte nach außen weisende Schicht aus einer vernetzten Kautschukmischung, wobei die Kautschukmischung der dritten Schicht wenigstens ein Polyurethanharz (PUR) und 60 bis 100 phr EPDM-Kautschuk oder 60 bis 100 phr EPM-Kautschuk oder 60 bis 100 phr einer Kombination aus EPDM-Kautschuk und EPM-Kautschuk enthält, und
- wenigstens eine weitere Schicht aus wenigstens einem Festigkeitsträger.

Überraschenderweise haben Versuche gezeigt, dass ein Schlauch mit einem derartigen Schichtaufbau eine besonders gute Beständigkeit gegenüber Bissen von Raubtieren, insbesondere Mardern, oder Nagetieren aufweist.

Die Kautschukmischung der ersten innenliegenden Schicht enthält erfindungsgemäß 60 bis 100 phr, bevorzugt 80 bis 100 phr, besonders bevorzugt 100 phr, wenigstens eines fluorhaltigen Kautschuks. Zu den fluorhaltigen Kautschuken werden im Rahmen der vorliegenden Erfindung neben den Fluorkautschuken (FKM gemäß DIN ISO 1629), die als gemeinsames Merkmal Vinyliden(di)fluorid (VDF) als eines ihrer Monomere besitzen, ebenso fluorierte Elastomere, wie z.B. Perfluorkautschuk (FFKM),
Tetrafluorethylen/Propylen-Kautschuke (FEPM) und fluorierter Silikonkautschuk (FVMQ) gezählt.

Zu den fluorhaltigen Kautschuken zählen ebenso Copolymere von Vinylidenfluorid (VDF) und Hexafluorpropylen (HFP) und Terpolymere von VDF, HFP und Tetrafluorethylen (TFE).

Besonders gute Beständigkeit gegenüber Kraftstoffen und Motorölen und eine besonders gute Temperaturbeständigkeit wird bei der Verwendung von FVMQ, FKM, oder den genannten Copolymeren und den genannten Terpolymeren erzielt.

Die vernetzte Kautschukmischung der zweiten Schicht enthält erfindungsgemäß 60 bis 100 phr, bevorzugt 80 bis 100 phr, besonders bevorzugt 100 phr, wenigstens eines Silikonkautschuks. Der Silikonkautschuk gewährleistet, dass der Schlauch auch bei höheren Temperaturen, z. Bps bis 200°C und höher, verwendet werden kann. Als Silikonkautschuke können alle der fachkundigen Person bekannten Silikonkautschuke, wie bspw. MQ (Methyl-Silikonkautschuk), PMQ (MQ mit Phenyl-Gruppen), VMQ (MQ mit Vinyl-Gruppen), PVMQ (MQ mit Phenyl- und Vinyl-Gruppen) verwendet werden. Die Einteilung der Silikonkautschuke erfolgt gemäß DIN ISO 1629: 1992-03. Bevorzugt hat sich die Verwendung von VMQ gezeigt, da dieses eine besonders gute dynamische Tüchtigkeit aufweist.

Erfindungsgemäß enthält die vernetzte Kautschukmischung der dritten nach außen weisenden Schicht 60 bis 100 phr, bevorzugt 80 bis 100 phr, besonders bevorzugt 100 phr, EPDM-Kautschuk oder 60 bis 100 phr, bevorzugt 80 bis 100 phr, besonders bevorzugt 100 phr, EPM-Kautschuk oder 60 bis 100 phr, bevorzugt 80 bis 100 phr, besonders bevorzugt 100 phr, einer Kombination aus EPDM-Kautschuk und EPM-Kautschuk.

Erfindungsgemäß besitzt der Schlauch noch wenigstens eine weitere Schicht auf Basis wenigstens eines Festigkeitsträgers.

Hierbei kann es sich um eine oder um mehrere Festigkeitsträgerschichten handeln, die sich bevorzugt zwischen der ersten und zweiten Schicht oder zwischen der zweiten und dritten Schicht befindet.

Die Festigkeitsträgerschicht kann ein- oder mehrlagig ausgebildet sein und ist aus einem textilen Flächengebilde aufgebaut. Das textile Flächengebilde der Festigkeitsträgerschicht kann ein Gewebe, Gewirk oder Gestrick sein. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyoxadiazol (POD), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen.

Neben der Kautschukkomponente enthalten die Kautschukmischungen der ersten, zweiten und dritten Schicht in der Regel noch die üblichen Mischungsingredienzien. Von besonderer Bedeutung ist dabei das Vernetzersystem, gebildet aus einem Vernetzungsmittel und einem Coagenz oder Beschleuniger. Die weiteren Mischungsingredienzien umfassen wenigstens einen Füllstoff und/oder ein Metalloxid und/oder einen Weichmacher und/oder ein Verarbeitungshilfsmittel und/oder ein Alterungsschutzmittel und/oder ein Haftmittel.

Ebenso von besonderer Bedeutung ist der Einsatz wenigstens eines Harzes. Als Harze können alle der fachkundigen Personen bekannten Harze verwendet werden.

Hierbei kann es sich bspw. um Cumaron-Inden-Harze, Petroleumharze, Terpenharze, Asphalt, Teer, Bitumen, chlorierte organische Verbindungen, Lignin, Kolophoniumharze, Phenol-Formaldehydharze oder um Polyurethan-Harze (PUR-Harze) handeln.

Diese können jeweils alleine oder in Kombination verwendet werden.

Erfindungsgemäß ist die Verwendung von Polyurethan-Harz vorgesehen. Dieses zeigt bei Verwendung in der Kautschukmischung der dritten Schicht neben der Eigenschaft als Haftvermittler noch eine zusätzliche Optimierung der Beständigkeit der Kautschukmischung gegenüber Bissen von Raubtieren, wie z. Bsp. Mardern, oder von Nagetieren, wie z. Bsp. Ratten.

Darüber hinaus können weitere Zusatzstoffe der jeweiligen Kautschukmischung beigegeben werden, beispielsweise Kurzfasern, Füllstoffmehle, Recyclate, Silane, Farbstoffe, Wachse, Stabilisatoren, Gleithilfen, Verzögerer.

Die Erfindung wird nun anhand von Ausführungsbeispielen, die in der Tabelle 1 zusammengefasst sind, näher erläutert.

Tabelle 1 zeigt Tests an Ladeluftschläuchen mit jeweils verschiedenem Aufbau. Zu erkennen ist, dass nur der erfindungsgemäße Aufbau sicher vor einer Zerstörung durch Bisse von Raubtieren oder Nagetieren schützt.

Der Nagetiertest wurde dabei wie folgt durchgeführt:
Jeweils zwei Ratten wurden in einer Box mit Nahrung und Wasser und den Schläuchen für zwei Wochen gehalten.

**Tabelle 1**

| | | | **erste Schicht:FKM** |
|---|---|---|---|
| | **innen: AEM** | **innen: FVMQ** | **zweite Schicht: VMQ** |
| | **außen: VMQ** | **außen: VMQ** | **dritte Schicht: EPDM** |
| **Schlauch (neu)** | siehe Figur 1 | siehe Figuren 2 und 3 | siehe Figur 4 |
| **Nach Nagetiertest** | siehe Figur 5 | siehe Figuren 6, 7 und 8 | siehe Figur 9 |

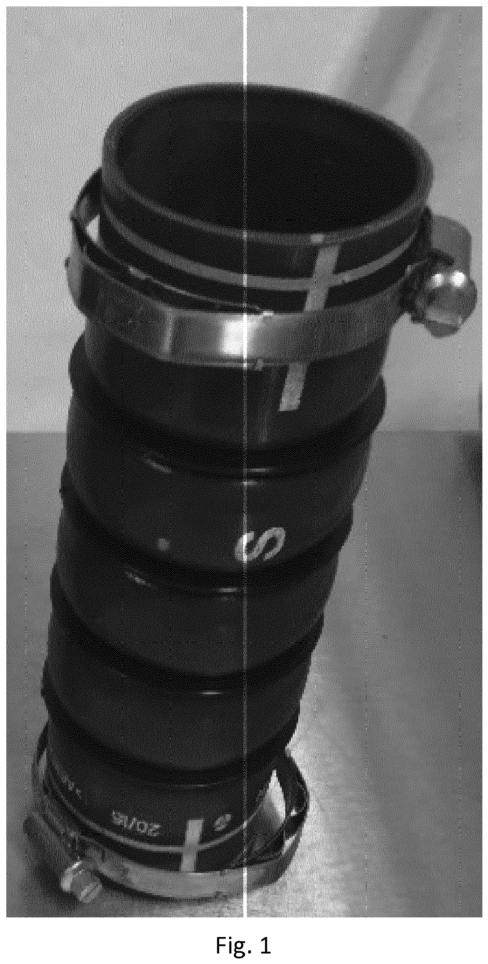

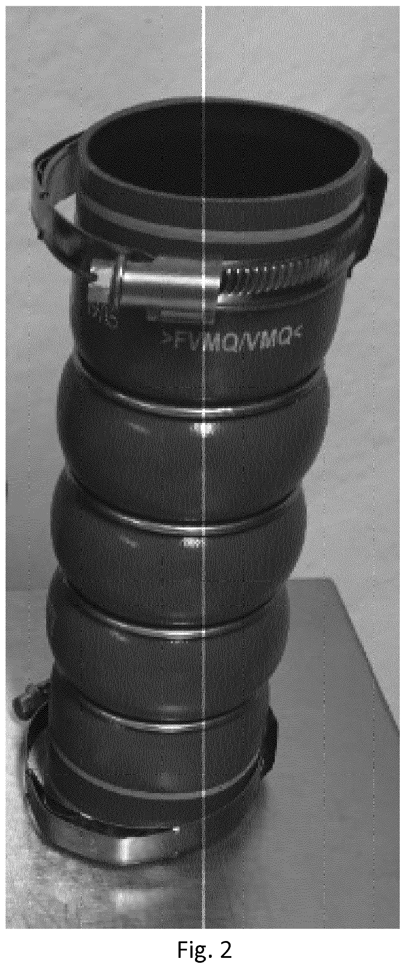

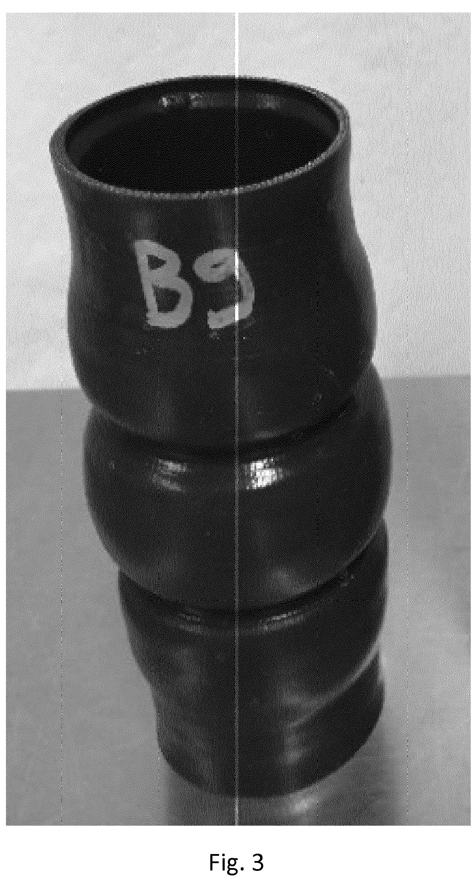

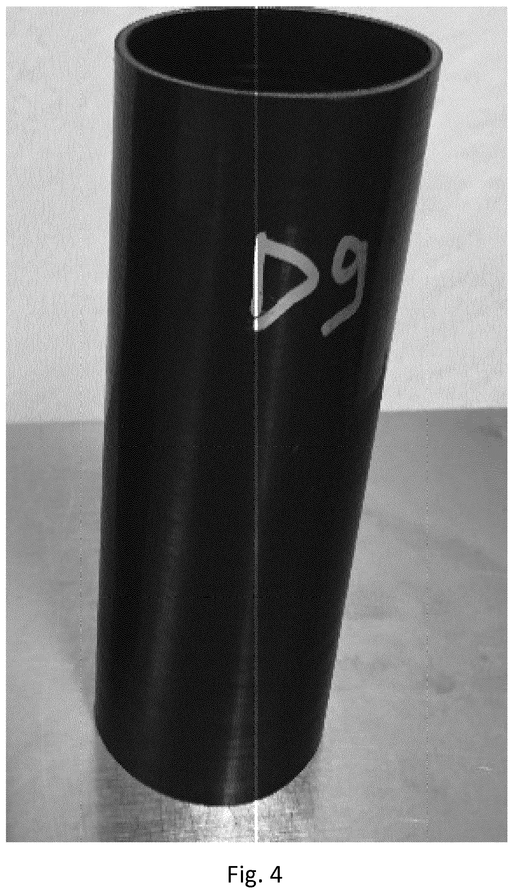

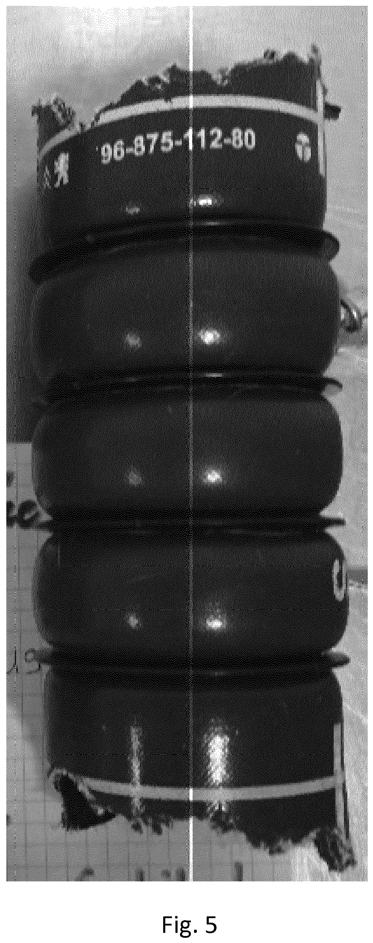

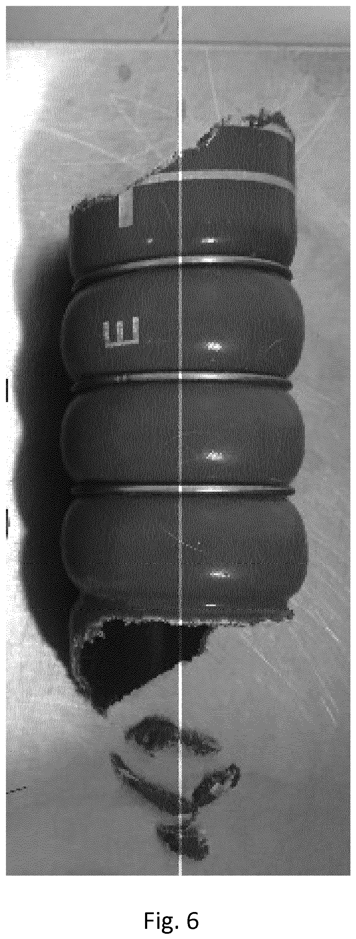

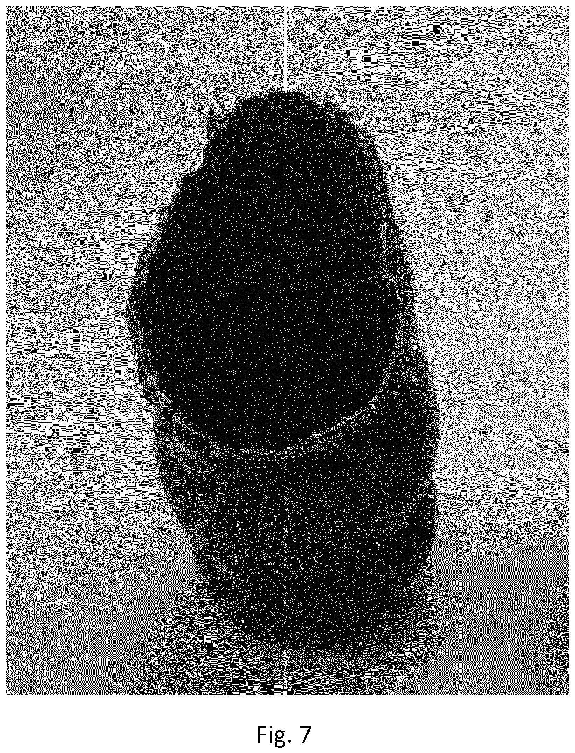

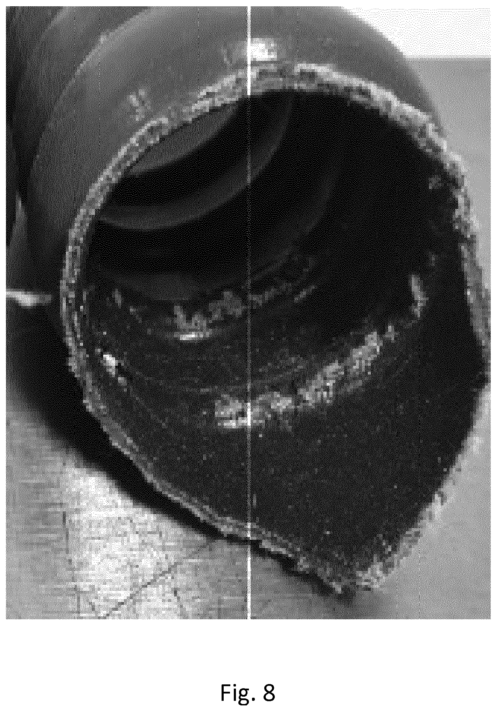

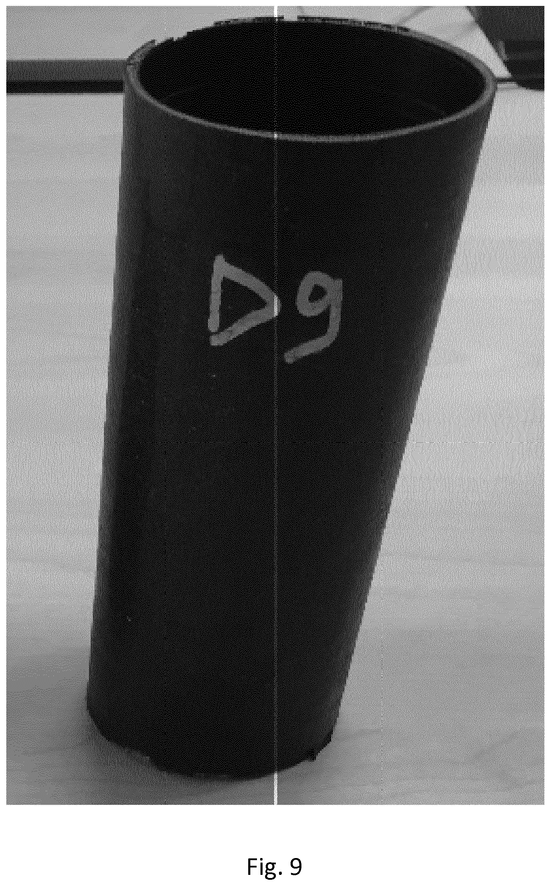

## Patentansprüche

1. Schlauch, der folgenden Schichtenaufbau besitzt:
- eine erste innenliegende Schicht aus einer vernetzten Kautschukmischung, wobei die Kautschukmischung der ersten Schicht 60 bis 100 phr wenigstens eines fluorhaltigen Kautschuks enthält, und
- eine zweite Schicht aus einer vernetzten Kautschukmischung, wobei die Kautschukmischung der zweiten Schicht 60 bis 100 phr wenigstens eines Silikonkautschuks enthält, und
- eine dritte nach außen weisende Schicht aus einer vernetzten Kautschukmischung, wobei die Kautschukmischung der dritten Schicht wenigstens ein Polyurethanharz (PUR-Harz) und 60 bis 100 phr EPDM-Kautschuk oder 60 bis 100 phr EPM-Kautschuk oder 60 bis 100 phr einer Kombination aus EPDM-Kautschuk und EPM-Kautschuk enthält, und
- wenigstens eine weitere Schicht aus wenigstens einem Festigkeitsträger.

2. Schlauch nach Anspruch 1, **dadurch gekennzeichnet, dass** die Kautschukmischung der dritten Schicht 80 bis 100 phr EPDM-Kautschuk oder 80 bis 100 phr EPM-Kautschuk oder 80 bis 100 phr einer Kombination aus EPDM-Kautschuk und EPM-Kautschuk enthält.

## Claims

1. A hose, having the following layered structure:
- a first inner layer of a cross-linked rubber compound, wherein the rubber compound of the first layer contains 60 to 100 phr of at least one fluorinated rubber, and
- a second layer of a cross-linked rubber compound, wherein the rubber compound of the second layer contains 60 to 100 phr of at least one silicone rubber, and
- a third outward-facing layer of a cross-linked rubber compound, wherein the rubber compound of the third layer contains at least one polyurethane resin (PUR resin) and 60 to 100 phr of EPDM rubber or 60 to 100 phr of EPM rubber or 60 to 100 phr of a combination of EPDM rubber and EPM rubber, and
- at least one further layer made of at least one reinforcing material.

2. The hose according to claim 1, **characterized in that** the rubber compound of the third layer contains 80 to 100 phr of EPDM rubber or 80 to 100 phr of EPM rubber or 80 to 100 phr of a combination of EPDM rubber and EPM rubber.

## Revendications

1. Tuyau flexible possédant la structure stratifiée suivante :
- une première couche interne constituée d'un composé de caoutchouc réticulé, le composé de caoutchouc de la première couche contenant de 60 à 100 pce d'au moins un caoutchouc fluoré, et
- une deuxième couche constituée d'un composé de caoutchouc réticulé, le composé de caoutchouc de la deuxième couche contenant de 60 à 100 pce d'au moins un caoutchouc de silicone, et
- une troisième couche orientée vers l'extérieur d'un composé de caoutchouc réticulé, le composé de caoutchouc de la troisième couche contenant au moins une résine de polyuréthane (résine PUR) et de 60 à 100 pce de caoutchouc EPDM ou de 60 à 100 pce de caoutchouc EPM ou de 60 à 100 pce d'une combinaison de caoutchouc EPDM et de caoutchouc EPM, et
- au moins une couche supplémentaire constituée d'au moins un support de renforcement.

2. Tuyau flexible selon la revendication 1, **caractérisé en ce que** le composé de caoutchouc de la troisième couche contient de 80 à 100 pce de caoutchouc EPDM ou de 80 à 100 pce de caoutchouc EPM ou de 80 à 100 pce d'une combinaison de caoutchouc EPDM et de caoutchouc EPM.
